(19) Europäisches Patentamt
European Patent Office
Office européen des brevets

(11) EP 3 593 995 A1

(12) # EUROPEAN PATENT APPLICATION
published in accordance with Art. 153(4) EPC

(43) Date of publication:
**15.01.2020 Bulletin 2020/03**

(21) Application number: **18763290.6**

(22) Date of filing: **08.03.2018**

(51) Int Cl.:
***B32B 27/32*** *(2006.01)* ***B32B 15/085*** *(2006.01)*
***B32B 15/20*** *(2006.01)* ***B65D 65/40*** *(2006.01)*

(86) International application number:
**PCT/JP2018/009029**

(87) International publication number:
**WO 2018/164230 (13.09.2018 Gazette 2018/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.03.2017 JP 2017046174**

(71) Applicant: **Toppan Printing Co., Ltd.**
**Tokyo 110-0016 (JP)**

(72) Inventors:
- **KOIDE, Youko**
  **Tokyo 110-0016 (JP)**
- **ISHIDA, Satoru**
  **Tokyo 110-0016 (JP)**
- **HIROSE, Ryo**
  **Tokyo 110-0016 (JP)**
- **SUGIYAMA, Yuki**
  **Tokyo 110-0016 (JP)**
- **SASAKI, Noe**
  **Tokyo 110-0016 (JP)**

(74) Representative: **TBK**
**Bavariaring 4-6**
**80336 München (DE)**

(54) **LAMINATE, PACKAGING BODY, AND PACKAGED ITEM**

(57) A laminate 1 according to the present invention comprises a base material layer 11 and a sealant layer 15, the sealant layer 15 comprising a first layer 15a containing a cyclic olefin resin and a second layer 15b interposed between the base material layer 11 and the first layer 15a and containing a low density polyethylene resin, wherein a ratio of a thickness of the first layer 15a to a thickness of the second layer 15b is in a range of 1:2 to 5:1, the low density polyethylene resin has a melt flow rate (MFR) at 190°C and a load of 21.168N of 3.6 g/10 min to 13.0 g/10 min, the low density polyethylene resin has a density in a range of 0.915 g/cm$^3$ to 0.925 g/cm$^3$, each of the first and second layers has a thickness of 5 μm or more, and the second layer has a thickness of 25 μm or less.

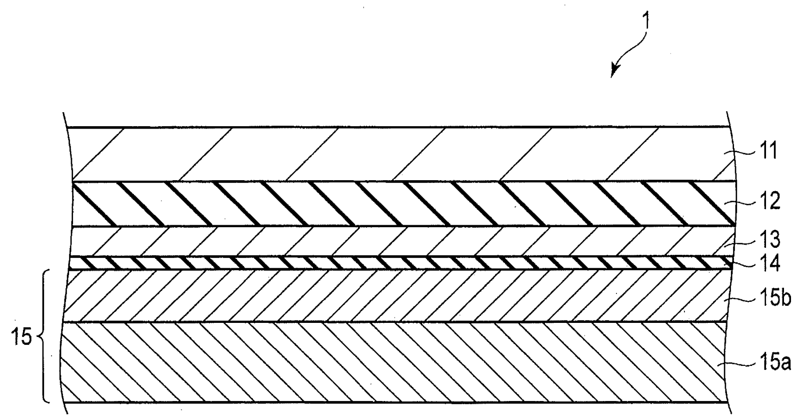


F I G. 1

EP 3 593 995 A1

**Description**

FIELD

The present invention relates to a laminate, a package, and a packaged material.

BACKGROUND

In a laminate used as a packaging material, etc., a thermoplastic resin is used for its sealant layer. In particular, a polyethylene resin or a polypropylene resin is used as the thermoplastic resin, from the viewpoint of being excellent in lamination processability and heat sealability.

However, while these resins can achieve high adhesion strength in heat sealing, they tend to adsorb components contained in foods and medicines. Therefore, a package including a sealant layer made of such a resin so as to be in contact with a space for containing contents is liable to degrade or deteriorate the contents.

For this reason, polyacrylonitrile resin (PAN), which is a non-adsorbable material, has been used for sealant layers in laminates used for packaging of foods and medicines. However, it is difficult to procure polyacrylonitrile resin films stably, and there is a need to find substitute materials for polyacrylonitrile resins.

Jpn. Pat. Appln. KOKAI Publication No. 2008-207823 describes a packaging bag having high-speed filling packaging applicability and causing extremely low adsorption of volatile components derived from the contents. This packaging bag is made of a laminate material in which a base material layer, a low density polyethylene resin layer, and a cyclic polyolefin resin composition layer are laminated in this order. In this document, a structure is adopted in which a ratio of the thickness between the low density polyethylene resin layer and the cyclic polyolefin resin composition layer is in the range of 20:1 to 2:1. This structure enables high-speed filling of contents.

The invention described in Jpn. Pat. Appln. KOKAI Publication No. 2012-86876 aims to provide a packaging bag and a packaging container each having a sealant layer excellent in film-forming property, non-adsorptivity, and heat sealability. This document describes, in order to achieve the above-mentioned object, using, for a lid member of the packaging bag or packaging container, a laminate including a base material layer, a linear low density polyethylene resin layer, and a cyclic polyolefin resin composition layer being provided in this order and having a predetermined composition as the cyclic polyolefin resin composition. In this invention, as the sealant layer, a linear low density polyethylene resin and a cyclic polyolefin resin composition are used.

SUMMARY

An object of the present invention is to provide a laminate which is less likely to cause adsorption.

According to a first aspect of the present invention, there is provided a laminate comprising a base material layer and a sealant layer, the sealant layer comprising a first layer containing a cyclic olefin resin and a second layer interposed between the base material layer and the first layer and containing a low density polyethylene resin, wherein a ratio of a thickness of the first layer to a thickness of the second layer is in a range of 1:2 to 5:1, the low density polyethylene resin has a melt flow rate (MFR) at 190°C and a load of 21.168N of 3.6 g/10 min to 13.0 g/10 min, the low density polyethylene resin has a density in a range of 0.915 g/cm$^3$ to 0.925 g/cm$^3$, each of the first and second layers has a thickness of 5 $\mu$m or more, and the second layer has a thickness of 25 $\mu$m or less.

According to a second aspect of the present invention, there is provided a package comprising the laminate according to the first aspect such that the first layer is adjacent to a space for containing contents.

According to a third aspect of the present invention, there is provided a packaged article comprising the package according to the second aspect, and contents contained in the package.

BRIEF DESCRIPTION OF THE DRAWINGS

FIG. 1 is a cross-sectional view schematically showing a laminate according to an embodiment of the present invention.
FIG. 2 is a view schematically showing a method for producing a laminate according to an embodiment of the present invention.

DETAILED DESCRIPTION

Hereinafter, embodiments of the present invention will be described with reference to the drawings. Elements

having the same or a similar function are provided with the same reference sign, and overlapping descriptions thereof are omitted.

FIG. 1 is a cross-sectional view schematically showing a laminate according to an embodiment of the present invention.

A laminate 1 shown in FIG. 1 is used, for example, as a packaging material. This laminate may also be used, for example, as a cover film which covers a surface of a pressable button of an electronic device.

The laminate 1 includes a base material layer 11, an adhesive resin layer 12, a barrier layer 13, an adhesive layer 14, and a sealant layer 15. In the laminate 1 of the present invention, an adhesive layer may be provided between any of the layers.

The base material layer 11 is made, for example, of a sheet of paper, a resin film, or a combination thereof. As a resin film, a biaxially oriented polypropylene film, a biaxially oriented polyester film, a biaxially oriented nylon film, or a cellophane film can be used, for example.

A printing layer may be provided on a main surface of the base material layer 11. The printing layer may be provided on a barrier layer 13 side main surface of the base material layer 11 of main surfaces of the base material layer 11, may be provided on a back surface thereof, or may be provided on both of them.

The adhesive resin layer 12 is interposed between the base material layer 11 and the barrier layer 13. The adhesive resin layer 12 bonds the base material layer 11 and the barrier layer 13. The adhesive resin layer 12 contains, for example, a polyolefin resin, such as low density polyethylene and linear low density polyethylene.

An adhesive layer (not shown) containing an anchor coating agent may be interposed between the base material layer 11 and the adhesive resin layer 12. In this case, the adhesive layer is obtained by applying an anchor coating agent, such as a urethane anchor coating agent, onto the main surface of the base material layer 11. This adhesive layer further strengthens the adhesion between the base material layer 11 and the adhesive resin layer 12.

It should be noted that the base material layer 11 and the barrier layer 13 may be bonded together by an adhesive to be described later, instead of providing the adhesive resin layer 12.

The barrier layer 13 adheres to one main surface of the base material layer 11 via the adhesive resin layer 12. The barrier layer 13 suppresses the permeation of gases, such as water vapor and oxygen, through the laminate 1.

The barrier layer 13 is, for example, a layer including an aluminum layer or an inorganic oxide thin film. For example, the barrier layer 13 is an aluminum foil, an aluminum vapor deposition film, or a transparent vapor deposition film.

The thickness of the aluminum foil is preferably in the range of 5 $\mu$m to 15 $\mu$m, and more preferably in the range of 5 $\mu$m to 9 $\mu$m. If the aluminum foil is too thin, handling at the time of bonding it to the base material layer 11 is difficult. If the thickness of the aluminum foil is excessively increased, it cannot be expected to improve the barrier property accompanied by an increase in thickness, resulting in high cost. Additionally, in this case, the flexibility of the laminate 1 degrades, and it becomes difficult to handle the laminate 1.

An aluminum vapor deposition film is a film in which an aluminum layer is vapor-deposited on a resin film.

The resin film is, for example, a biaxially oriented polyethylene terephthalate film, a biaxially oriented nylon film, or a biaxially oriented polypropylene film. The thickness of the resin film is not particularly limited, but is preferably in the range of 3 $\mu$m to 200 $\mu$m, and more preferably in the range of 6 $\mu$m to 30 $\mu$m.

The thickness of the aluminum vapor deposition layer is preferably in the range of 5 nm to 100 nm. If the aluminum vapor deposition layer is too thin, it may not be possible to sufficiently prevent the entry of gases, such as water vapor and oxygen. A thick aluminum vapor deposition layer is not only expensive, but also tends to cause cracks in the deposited layer, which may lead to a degradation in barrier property.

The transparent vapor deposition film is a film in which an inorganic oxide thin film is formed on a resin film by means of a vacuum vapor deposition method or sputtering method.

As the resin film of the transparent vapor deposition film, the same films as those illustrated for the resin film of the aluminum vapor deposition film can be used.

The inorganic oxide thin film is made of, for example, an inorganic oxide, such as a silicon oxide, an aluminum oxide, and a magnesium oxide. Most inorganic oxide thin film layers are colorless or very faintly colored transparent layers, and thus, the transparent vapor deposition film is suitable when the laminate 1 is required to have transparency. Furthermore, since microwaves pass through an inorganic oxide thin film, unlike metal layers, the laminate 1 including the transparent vapor deposition film as the barrier layer 13 can also be used for packaging materials of foodstuffs which are heated in a microwave oven.

The thickness of the inorganic oxide thin film is preferably in the range of 5 nm to 300 nm, and more preferably in the range of 10 nm to 150 nm. If the inorganic oxide thin film is too thin, a uniform film may not be obtained or the thickness may not be sufficient, and the function as the barrier layer 13 may not be sufficiently fulfilled. If the inorganic oxide thin film is too thick, the inorganic oxide thin film may be cracked when the laminate 1 is bent or pulled.

As the transparent vapor deposition film, for example, commercially available products, such as trade name "GL FILM" and "PRIME BARRIER (registered trademark)" (both manufactured by TOPPAN PRINTING CO., LTD.) can be used.

The aluminum vapor deposition layer and the inorganic oxide thin film may be formed on or above the base material layer 11. The adhesive resin layer 12 and the barrier layer 13 may be omitted when the base material layer 11 contains a resin film.

The sealant layer 15 adheres to one main surface of the barrier layer 13 via the adhesive layer 14. The sealant layer 15 imparts heat sealability to the laminate 1.

The sealant layer 15 includes a first layer 15a and a second layer 15b. According to an example, the sealant layer 15 is a two-layered co-extruded film composed of the first layer 15a and the second layer 15b.

The first layer 15a is in contact with one main surface of the adhesive layer 14 via the second layer 15b. The first layer 15a plays a role of improving the non-adsorptivity of the laminate 1, particularly, the sealant layer 15, in addition to imparting the heat sealability to the laminate 1. With respect to the first layer 15a, the size of a polymer free volume Vf of polymer obtained by a positron annihilation lifetime measurement method is preferably in the range of 0.10 $nm^3$ or less. The present inventors found a correlation between the polymer free volume obtained by a positron annihilation lifetime measurement method and the non-adsorptivity, and this finding led to the present invention. If the size of the polymer free volume Vf obtained by the positron annihilation lifetime measurement method exceeds 0.10 $nm^3$, desired non-adsorptivity may not be obtained.

The first layer 15a contains a cyclic olefin resin.

The cyclic olefin resin is preferably a ring-opening metathesis polymer (COP) which is polymerized by subjecting a cyclic olefin to a metathesis ring-opening polymerization reaction, or a copolymer between a cyclic olefin and an $\alpha$-olefin (chain olefin), i.e., a cyclic olefin copolymer (COC) or a mixture thereof.

As the cyclic olefin, any cyclic hydrocarbon having an ethylenically unsaturated bond and a bicyclo ring can be used. The cyclic olefin is particularly preferably one having a bicyclo[2.2.1] hepta-2-ene(norbornene) skeleton.

As a cyclic olefin resin obtained from the cyclic olefin having a norbornene skeleton, for example, a ring-opening metathesis polymer of a norbornene monomer can be used. An example of a commercially available product of such a ring-opening metathesis polymer is "ZEONOR (registered trademark)" manufactured by ZEON CORPORATION. As the cyclic olefin resin obtained from the cyclic olefin having a norbornene skeleton, for example, a norbornene cyclic olefin copolymer can also be used. Examples of a commercially available product of such a cyclic olefin copolymer include "APEL (registered trademark)" manufactured by Mitsui Chemicals, Inc., and "TOPAS (registered trademark)" manufactured by TOPAS ADVANCED POLYMERS GmbH and sold by Polyplastics Co., Ltd.

As the cyclic olefin resin, for example, a cyclic olefin copolymer, which is a copolymer obtained by copolymerizing ethylene and norbornene using a metallocene catalyst, can be suitably used. Cyclic polyolefin copolymers have non-adsorptivity equivalent to that of cyclic olefin polymers and are inexpensively available. As the copolymer obtained by copolymerizing ethylene and norbornene using a metallocene catalyst, it is possible to use a copolymer containing a repeating unit represented by chemical formula (a) and a repeating unit represented by chemical formula (b). An example of a commercially available product of such a cyclic olefin resin product is "TOPAS (registered trademark)" manufactured by TOPAS ADVANCED POLYMERS GmbH) and sold by Polyplastics Co., Ltd.

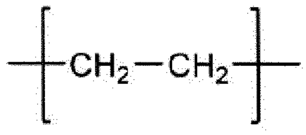

(a)

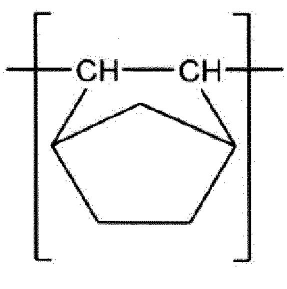

(b)

The glass transition temperature of a suitable cyclic olefin resin is in the range of 60°C to 100°C.

The first layer 15a may further contains an additive. The additive is, for example, one or more of a lubricant, an antioxidant, an ultraviolet light absorber, a light stabilizer, an antistatic agent, an anti-blocking agent, a flame retardant, a crosslinking agent, and a colorant. As the lubricant, for example, a higher fatty acid metal salt, aliphatic alcohol, polyglycol, triglyceride, wax, a phenolic compound, or a mixture containing one or more of them, may be suitably used for the purpose of improving the processability. The wax may be a natural substance-derived wax, for example, a mineral wax such as Montan wax, or a synthetic wax such as polyethylene wax.

The thickness of the first layer 15a is preferably 5 μm or more. Additionally, the thickness of the first layer 15a is preferably in the range of 10 μm to 50 μm, and more preferably in the range of 10 μm to 30 μm. If the first layer 15a is excessively thinned, the film formation of the first layer 15a becomes unstable, and the effect of suppressing adsorption may lower. If the first layer 15a is excessively thickened, the improvement in the adsorption suppressing effect accompanied by an increase in the thickness of the first layer 15a is slight.

The second layer 15b is interposed between the adhesive layer 14 and the first layer 15a.

The second layer 15b contains a low density polyolefin resin. An effect of improving the heat seal strength of the first layer 15a can be expected by the presence of the second layer 15b. Furthermore, the second layer 15b makes it difficult to cause neck-in in the first layer 15a during the film formation. In addition, the second layer 15b exhibits excellent adhesion strength relative to the first layer 15a.

The low density polyethylene resin is obtained by a known manufacturing method, such as a high-pressure method. The low density polyethylene resin is obtained by polymerizing, for example, ethylene obtained by thermal decomposition of naphtha. Examples of commercially available products of the low density polyethylene resin include "LC607K" (MFR at 190°C and 21.168N: 8.0 g/10 min, and density: 0.919 g/cm$^3$) and "LC520" (MFR at 190°C and 21.168N: 3.6 g/10 min, and density: 0.923 g/cm$^3$). Both of the resins are manufactured by Nippon Polyester Co., Ltd.

The melt flow rate (MFR) of the low density polyethylene resin at 190°C and a load of 21.168N (= 2.16 kgf) is preferably in the range of 3.6 g/10 min to 13.0 g/10 min, more preferably in the range of 4.0 g/10 min to 13.0 g/10 min, and further preferably in the range of 5 g/10 min to 10.5 g/10 min. The melt flow rate (MFR) referred to herein is a measurement value obtained by a method conforming to JIS K7210:1999. The melt flow rate (MFR) is a measurement value of the weight of resin discharged in 10 min when a load of 2.16 kgf is applied to the resin at 190°C. Hereinafter, the term "melt flow rate (MFR)" means a value obtained by this method.

When the melt flow rate (MFR) of the low density polyethylene resin largely differs from the melt flow rate (MFR) of the cyclic olefin resin, there may be a case where the film formation becomes unstable when forming the first layer 15a and the second layer 15b by an extrusion laminating method.

When as the low density polyethylene resin, a low density polyethylene resin whose melt flow rate (MFR) is in the above range is used, physical properties suitable for the extrusion lamination can be obtained, and inconvenience is hardly caused even when high-speed film formation is performed. In this case, a homogeneous layer can be formed.

The density of the low density polyethylene resin is preferably in the range of 0.915 g/cm$^3$ to 0.925 g/cm$^3$, and more preferably in the range of 0.915 g/cm$^3$ to 0.922 g/cm$^3$. If the density of the low density polyethylene resin is too low, the film formation of the second layer 15b is highly likely to be unstable. If the density of the low density polyethylene resin is too high, the film formation becomes unstable. The density referred to herein is a measurement value obtained by a method conforming to JIS K7112:1999.

The low density polyethylene resin contained in the second layer 15b differs in the number of branched carbon atoms of side chains relative to the main chain from linear low density polyethylene resins. A low density polyethylene resin has long chain branches exceeding about 20 carbon atoms. On the other hand, a linear low density polyethylene resin does not have long chain branches exceeding about 20 carbon atoms. The low density polyethylene resin is superior to linear low density polyethylene resins in that it hardly causes an oscillatory phenomenon or a neck-in phenomenon when the layer is formed by an extrusion laminating method. Furthermore, the low density polyethylene resin is also superior in tearability to linear low density polyethylene resins.

When the low density polyethylene resin and the cyclic olefin resin are laminated using an extrusion laminating method, the film formation thereof is favorably performed if the melting point of the low destiny polyethylene resin is in the range of 100°C to 120°C. The melting point of the low density polyethylene resin is more preferably in the range of 100°C to 110°C. If the melting point is 120°C or higher, processing of the layer tends to be difficult due to an oscillatory phenomenon and/or a neck-in phenomenon.

The thickness of the second layer 15b is preferably 5 μm or more. Additionally, the thickness of the second layer 15b is preferably in the range of 5 μm to less than 30 μm, and more preferably in the range of 5 μm to 25 μm. If the second layer 15b is excessively thinned, the film formation of the second layer 15b becomes unstable. If the second sealant layer 15b is excessively thickened, adsorption is liable to occur.

A ratio of the thickness of the first layer 15a to the thickness of the second layer 15b is preferably in the range of 1:2 to 5:1, and more preferably in the range of 1:1 to 5:1. If the ratio is excessively small, adsorption cannot be sufficiently suppressed. If the ratio is excessively large, the film formation of the second layer 15b may become unstable,

or adsorption cannot be suppressed during long-term storage.

The thickness of the sealant layer 15 is preferably in the range of 10 μm to 60 μm, and more preferably in the range of 10 μm to 30 μm. If the thickness of the sealant layer 15 is excessively reduced, a sufficient initial seal strength may not be achieved, or degradation in seal strength during a long-term storage may become remarkable. If the thickness of the sealant layer 15 is excessively increased, in many applications, it will be overdesigned and disadvantageous in cost.

The second layer 15b may further contain an additive. The additive is, for example, one or more of an antioxidant, an ultraviolet light absorber, a light stabilizer, an antistatic agent, an anti-blocking agent, a flame retardant, a crosslinking agent, and a colorant.

The adhesive layer 14 is interposed between the barrier layer 13 and the sealant layer 15 and bonds the barrier layer 13 and the sealant layer 15. The adhesive layer 14 is made of an adhesive, for example.

The adhesive is, for example, one or more of a solvent-type adhesive, a water-based adhesive, a reaction-type adhesive, and a hotmelt-type adhesive.

The solvent-type adhesive is an adhesive which uses an organic solvent as a solvent. The solvent-type adhesive is, for example, a vinyl acetate solvent-type adhesive, a rubber solvent-type adhesive, an ether solvent-type adhesive, or a polyester solvent-type adhesive.

The water-based adhesive is an adhesive which uses water as a solvent. The water-based adhesive is, for example, a vinyl acetate resin water-based adhesive, a vinyl acetate copolymer resin water-based adhesive, an acrylic resin water-based adhesive, an epoxy resin water-based adhesive, or a nitrile rubber water-based adhesive.

The reaction-type adhesive is an adhesive which becomes hardened by a chemical reaction. The reaction-type adhesive is, for example, an epoxy resin adhesive and a polyurethane adhesive. The polyurethane adhesive may be a one-part polyurethane adhesive or a two-part polyurethane adhesive which is used in the form of a mixture obtained by mixing a base compound having a hydroxy group and a hardening agent having an isocyanate group.

The hotmelt-type adhesive is an adhesive which is melted by applying heat thereto and thereafter is solidified by cooling. The hotmelt-type adhesive is, for example, a polyamide resin adhesive or a polyester adhesive.

An adhesive provided between the barrier layer 13 and the sealant layer 15 is preferably a polyurethane adhesive, and further preferably a two-part polyurethane adhesive.

The thickness of the adhesive layer 14 is preferably in the range of 0.1 μm to 1.0 μm, and more preferably in the range of 0.2 μm to 5 μm. It should be noted that the thickness of the adhesive layer 14 is a thickness measured after drying the adhesive. If the amount of the adhesive is too small, it is difficult to increase the adhesion strength between the barrier layer 13 and the sealant layer 15. If the amount of the adhesive is too large, a solvent contained in the adhesive may not volatilize sufficiently.

It should be noted that the adhesive resin layer 12 and the barrier layer 13 may be omitted. If the adhesive resin layer 12 and the barrier layer 13 are omitted, the adhesive layer 14 is interposed between the base material layer 11 and the sealant layer 15 and bonds the base material layer and the sealant layer 15. It should be noted that the adhesive layer 14 may further be omitted. If the adhesive resin layer 12, barrier layer 13, and adhesive layer 14 are omitted, the second layer 15b bonds the base material layer 11 and the sealant layer 15.

The laminate 1 adopts the above-mentioned structure for the sealant layer 15. Therefore, the laminate 1 hardly causes adsorption by the sealant layer 15, delamination between the sealant layer 15 and the adhesive layer 14, and delamination between the layers constituting the sealant layer 15.

The laminate 1 preferably has excellent tearability. "having excellent tearability" means that it can be easily torn by hand, and it can be torn apart linearly when it is to be torn apart.

Hereinafter, an example of a method for producing a laminate according to the present invention will be described.

FIG. 2 is a view schematically showing a method for producing a laminate according to an embodiment of the present invention.

In the method shown in FIG. 2, a laminate is produced by a roll-to-roll method.

Specifically, first, an unwind roll 16 unwinds a base material layer 11. The unwound base material layer 11 is guided from the unwind roll 16 to an adhesive application unit 18 by guide rolls 17a, 17b, and 17c, and passes through the adhesive application unit 18.

The adhesive application unit 18 applies an adhesive to one main surface of the base material layer 11. The adhesive is, for example, the adhesive described above. When the adhesive is applied to the main surface of the base material layer 11, an adhesive layer 14 is formed on the base material layer 11. Hereinafter, a laminate including the base material layer 11 and the adhesive layer 14 is referred to as a first laminate.

The first laminate is guided from the adhesive application unit 18 to a drying furnace 19 by guide rolls 17d and 17e and then passes through the drying furnace 19. The drying furnace 19 dries the first laminate.

The dried first laminate is next conveyed between a nip roll 23a and a cooling roll 23b facing each other with a slight gap.

A material of a first layer 15a is supplied to a T die 22 from a first extrusion unit 20. Furthermore, a material of

a second layer 15b is supplied to the T die 22 from a second extrusion unit 21. The T-die 22 supplies the material of the first layer 15a and the material of the second layer 15b to the gap. By this supply, a sealant layer 15 including the first layer 15a and the second layer 15b is formed on the adhesive layer 14.

The laminate composed of the material of the first layer 15a and the material of the second layer 15b is cooled by the cooling roll 23b. A laminate 1 is obtained in this way.

The laminate 1 is then guided to a wind-up roll 24 by a guide roll 17f. The wind-up roll 24 winds up the laminate 1.

Next, another example of the method for producing the laminate 1 will be described.

First, a base material layer 11 is prepared, and an anchor coating agent is applied to one main surface thereof to form an adhesive layer.

Next, the raw material of an adhesive resin layer 12 is heated and melted, and the base material layer 11 and a barrier layer 13 are sandwich-laminated with the melted raw material interposed therebetween. At this time, the lamination is performed so that the adhesive layer formed on the base material layer 11 is in contact with the adhesive resin layer 12. The base material layer 11 and the barrier layer 13 may be bonded together by dry lamination.

Next, an adhesive is applied onto the barrier layer 13 to form an adhesive layer 14.

Next, the second layer 15b and the first layer 15a are laminated on or above the adhesive layer 14 by an extrusion laminating method to form a sealant layer 15. That is, the raw material of the second layer 15b and the raw material of the first layer 15a are coextruded on the adhesive layer 14 to form the second layer 15b and the first layer 15a.

It should be noted that when the adhesive resin layer 12 and the barrier layer 13 are omitted from the laminate 1, the sealant layer 15 is formed on the base material layer 11 by an extrusion laminating method. Specifically, the second layer 15b and the first layer 15a are laminated on or above the adhesive layer 14 by an extrusion laminating method to form the second layer 15b and the first layer 15a.

A laminate 1 is obtained in the manner described above.

According to this method, the laminate 1 can be produced at a lower cost as compared with a method of separately forming a sealant layer 15 and then laminating the same.

Incidentally, if the first layer containing a cyclic olefin resin and the second sealant layer containing a low density polyethylene resin are formed as a sealant layer by an extrusion laminating method, the following problems have existed in a trade-off relationship.

- When the heat-melting temperature of the resin is high, the cyclic olefin resin becomes colored, leading to a defective appearance.
- When the heat-melting temperature of the resin is low, sufficient adhesion strength between the sealant layer and the base material layer cannot be obtained.

As a result of an extensive investigation, the present inventors found that a laminate having particularly high adhesion strength and particularly high non-adsorptivity can be obtained without causing appearance defects by adjusting the thickness of the first layer 15a and the thickness of the second layer 15b within predetermined ranges, and by setting the melt flow rate (MFR) and the density of the low density polyethylene used for the second layer 15b within the predetermined ranges. This finding led to the present invention.

As described above, the laminate 1 can be used as a packaging material, for example. In this case, a package including the packaging material includes the above-described laminate 1 such that the first layer 15a is in contact with a space for containing the contents. The package may be a bag, or may be a container including a container body having an opening and a lid closing the opening. In the latter case, the laminate 1 can be used as at least a part of a lid.

In a packaged article including the package and the contents contained therein, any contents may be employed. According to an example, the contents are medicines such as a patch. Specifically, the contents are a patch containing methyl salicylate, etc. According to another example, the contents are cosmetics or foods.

In this packaged article, the first layer 15a in the laminate 1 hardly permeates medical components, etc., and delamination attributable to permeation of medical components, etc. hardly occurs. Therefore, the performance degradation of the laminate 1 attributable to delamination, etc. hardly occurs, even if the package is stored in a sealed state for a long period of time. Furthermore, since the sealant layer 15 hardly causes adsorption, components contained in the contents, for example, liquid or paste components hardly adsorb to the sealant layer 15. That is, this packaged article hardly causes deterioration of contents thereof.

Hereinafter, examples of a laminate according to the present invention will be described. In the laminate of the present invention, an adhesive layer may be provided between any of the layers.

(1) An embodiment of the present invention is a laminate including: a first base material layer and a sealant layer, the sealant layer interposed between a first layer containing a cyclic olefin resin, and a second layer interposed between the first base material layer and the first layer and containing a low density polyethylene resin,
in which a ratio of a thickness of the first layer to a thickness of the second layer is in the range of 1:2 to 5:1,

the low density polyethylene resin has a melt flow rate (MFR) at 190°C and a load of 21.168 N in the range of 3.6 g/10 min to 13.0 g/10 min,
the low density polyethylene resin has a density in the range of 0.915 g/cm$^3$ to 0.925 g/cm$^3$,
each of the first and second layers has a thickness of 5 $\mu$m or more, and
the thickness of the second layer is 25 $\mu$m or less.
(2) Another embodiment of the present invention is the laminate according to (1) further including a first adhesive layer between the first base material layer and the sealant layer, in which the first base material layer is a biaxially oriented polypropylene film. In this laminate, for example, one surface of the first adhesive layer is in contact with the first base material layer, and the other surface thereof is in contact with the sealant layer.
(3) Another embodiment of the present invention is the laminate according to (1), further including: a first adhesive layer between the first base material layer and the sealant layer, in which the first base material layer is a biaxially oriented polyethylene terephthalate film. In this laminate, for example, one surface of the first adhesive layer is in contact with the first base material layer, and the other surface thereof is in contact with the sealant layer.
(4) Another embodiment of the present invention is the laminate according to (1), further including: a barrier layer interposed between the first base material layer and the sealant layer; the first adhesive layer interposed between the first base material layer and the barrier layer; and a second adhesive layer interposed between the barrier layer and the sealant layer, in which the first base material layer is a biaxially oriented polyethylene terephthalate film, and the barrier layer is an aluminum layer. In this laminate, for example, one surface of the first adhesive layer is in contact with the first base material layer, and the other surface thereof is in contact with the barrier layer. Additionally, one surface of the barrier layer is in contact with the first base material layer, and the other surface thereof is in contact with the second adhesive layer. Furthermore, one surface of the second adhesive layer is in contact with the barrier layer, and the other surface thereof is in contact with the sealant layer.
(5) Another embodiment of the present invention is the laminate according to (1), further including: a barrier layer interposed between the first base material layer and the sealant layer; the first adhesive layer interposed between the first base material layer and the barrier layer; a second adhesive layer interposed between the barrier layer and the sealant layer; and an adhesive resin layer interposed between the first base material layer and the first adhesive layer, in which the first base material layer is a biaxially oriented polyethylene terephthalate film, the adhesive resin layer is a polyethylene layer, and the barrier layer is an aluminum layer. In this laminate, for example, one surface of the adhesive resin layer is in contact with the first material layer, and the other surface thereof is in contact with the first adhesive layer. In addition, one surface of the first adhesive layer is in contact with the adhesive resin layer, and the other surface thereof is in contact with the barrier layer. Furthermore, one surface of the barrier layer is in contact with the first adhesive layer, and the other surface thereof is in contact with the second adhesive layer. Furthermore, one surface of the second adhesive layer is in contact with the barrier layer, and the other surface thereof is in contact with the sealant layer.
(6) Another embodiment of the present invention is the laminate according to (1), further including: a barrier layer interposed between the first base material layer and the sealant layer; the first adhesive layer interposed between the first base material layer and the barrier layer; and a second adhesive layer interposed between the barrier layer and the sealant layer, in which the first base material layer is a cellophane film, and the barrier layer is an aluminum layer. In this laminate, for example, one surface of the first adhesive layer is in contact with the first base material layer, and the other surface thereof is in contact with the barrier layer. Additionally, one surface of the barrier layer is in contact with the first adhesive layer, and the other surface thereof is in contact with the second adhesive layer. Furthermore, one surface of the second adhesive layer is in contact with the barrier layer, and the other surface thereof is in contact with the sealant layer.
(7) Another embodiment of the present invention is the laminate according to (1), further including: a barrier layer interposed between the first base material layer and the sealant layer; the first adhesive layer interposed between the first base material layer and the barrier layer; a second adhesive layer interposed between the barrier layer and the sealant layer; and an adhesive resin layer interposed between the first base material layer and the first adhesive layer, in which the first base material layer is a cellophane film, the adhesive resin layer is a polyethylene layer, and the barrier layer is an aluminum layer. In this laminate, for example, one surface of the adhesive resin layer is in contact with the first base material layer, and the other surface thereof is in contact with the first adhesive layer. Additionally, one surface of the first adhesive layer is in contact with the adhesive resin layer, and the other surface thereof is in contact with the barrier layer. Furthermore, one surface of the barrier layer is in contact with the first adhesive layer, and the other surface thereof is in contact with the second adhesive layer. Furthermore, one surface of the second adhesive layer is in contact with the barrier layer, and the other surface thereof is in contact with the sealant layer.
(8) Another embodiment of the present invention is the laminate according to (1), further including: a barrier layer interposed between the first base material layer and the sealant layer, the first adhesive layer interposed between the first base material layer and the barrier layer, and a second adhesive layer interposed between the barrier layer

and the sealant layer, in which the first base material layer is composed of a sheet of paper, a biaxially oriented polyethylene terephthalate film, and an adhesive interposed between the sheet of paper and the biaxially oriented polyethylene terephthalate film, and the barrier layer is an aluminum layer. In this laminate, for example, one surface of the first adhesive layer is in contact with the biaxially oriented polyethylene terephthalate film constituting the first base material layer, and the other surface thereof is in contact with the barrier layer. Additionally, one surface of the barrier layer is in contact with the first adhesive layer, and the other surface thereof is in contact with the second adhesive layer. Furthermore, one surface of the second adhesive layer is in contact with the barrier layer, and the other surface thereof is in contact with the sealant layer.

(9) Another embodiment of the present invention is the laminate according to (1), further including: a barrier layer interposed between the first base material layer and the sealant layer; the first adhesive layer interposed between the first base material layer and the barrier layer; a second adhesive layer interposed between the barrier layer and the sealant layer; and a second base material layer interposed between the barrier layer and the second adhesive layer, in which the first base material layer is a sheet of paper, the barrier layer is an aluminum layer, and the second base material layer is a nylon layer. In this laminate, for example, one surface of the first adhesive layer is in contact with the first base material layer, and the other surface thereof is in contact with the barrier layer. Additionally, one surface of the barrier layer is in contact with the first adhesive layer, and the other surface thereof is in contact with the second base material layer. Furthermore, one surface of the second base material layer is in contact with the barrier layer, and the other surface thereof is in contact with the second adhesive layer. Furthermore, one surface of the second adhesive layer is in contact with the second base material layer, and the other surface thereof is in contact with the sealant layer.

(10) Another embodiment of the present invention is the laminate according to (1), further including: a barrier layer interposed between the first base material layer and the sealant layer; the first adhesive layer interposed between the first base material layer and the barrier layer; a second adhesive layer interposed between the barrier layer and the sealant layer; and an adhesive resin layer interposed between the first base material layer and the first adhesive layer, in which the first base material layer is a sheet of paper, the barrier layer is an aluminum layer, and the adhesive resin layer is an ethylene-methacrylic acid copolymer layer. In this laminate, for example, one surface of the adhesive resin layer is in contact with the first base material layer, and the other surface thereof is in contact with the first adhesive layer. Additionally, one surface of the first adhesive layer is in contact with the adhesive resin layer, and the other surface thereof is in contact with the barrier layer. Furthermore, one surface of the barrier layer is in contact with the first adhesive layer, and the other surface thereof is in contact with the second adhesive layer. Furthermore, one surface of the second adhesive layer is in contact with the barrier layer, and the other surface thereof is in contact with the sealant layer.

(11) Another embodiment of the present invention is the laminate according to (1), further including: a barrier layer interposed between the first base material layer and the sealant layer; the first adhesive layer interposed between the first base material layer and the barrier layer; a second adhesive layer interposed between the barrier layer and the sealant layer; and an adhesive resin layer interposed between the first base material layer and the first adhesive layer, in which the first base material layer is a sheet of paper, the barrier layer is an aluminum layer, and the adhesive resin layer is a polyethylene layer. In this laminate, for example, one surface of the adhesive resin layer is in contact with the first base material layer, and the other surface thereof is in contact with the first adhesive layer. Additionally, one surface of the first adhesive layer is in contact with the adhesive resin layer, and the other surface thereof is in contact with the barrier layer. Furthermore, one surface of the barrier layer is in contact with the first adhesive layer, and the other surface thereof is in contact with the second adhesive layer. Furthermore, one surface of the second adhesive layer is in contact with the barrier layer, and the other surface thereof is in contact with the sealant layer.

Hereinafter, examples of a method for producing a laminate according to the present invention will be described.

(1) An embodiment of the present invention is a method for producing a laminate, including: forming, on a base material layer by extrusion lamination, a sealant layer which includes a first layer containing a cyclic olefin resin, and a second layer containing low density polyethylene so that the second layer is interposed between the base material layer and the first layer, and

a ratio of a thickness of the first layer to a thickness of the second layer is in the range of 1:2 to 5:1, in which the low density polyethylene resin has a melt flow rate (MFR) at 190°C and a load of 21.168 N in the range of 3.6 g/10 min to 13.0 g/10 min,

the low density polyethylene resin has a density in the range of 0.915 g/cm$^3$ to 0.925 g/cm$^3$, and

each of the first and second layers has a thickness of 5 $\mu$m or more, and the thickness of the second layer is 25 $\mu$m or less.

(2) Another embodiment of the present invention is the method for producing a laminate according to (1), further

including: forming an adhesive layer on the base material layer before forming the sealant layer on the base material layer, in which the sealant layer is formed on the adhesive layer.

(3) Another embodiment of the present invention is the method for producing a laminate according to (2), in which a process including the formation of the adhesive layer and the formation of the sealant layer is performed by a roll-to-roll method.

(4) Another embodiment of the present invention is the method for producing a laminate according to (2) or (3), further including: forming a barrier layer on the based material layer before forming the sealant layer on the base material layer and before forming the adhesive layer on the base material layer.

(5) Another embodiment of the present invention is the method for producing a laminate according to (4), in which the barrier layer contains aluminum.

(6) Another embodiment of the present invention is the method for producing a laminate according to any one of (1) to (5), in which the low density polyethylene resin has a melt flow rate (MFR) at 190°C and a load of 21.168 N in the range of 5.0 g/10 min to 10.5 g/10 min.

(7) Another embodiment of the present invention is the method for producing a laminate according to any one of (1) to (6), in which the thickness of the sealant layer is in the range of 10 μm to 60 μm.

EXAMPLES

Examples and Comparative Examples are described below.

<Example 1>

A laminate including a base material layer, a barrier layer, an adhesive layer, and a sealant layer was produced by the following method.

First, as a base material layer, a biaxially oriented polyethylene terephthalate film having a thickness of 12 μm was prepared. Specifically, "FE2001" manufactured by Futamura Chemical Co., Ltd. was prepared. In addition, an aluminum foil having a thickness of 7 μm was prepared as a barrier layer.

Next, an anchor coating agent was applied to one main surface of the base material layer, and subsequently, the base material layer and the barrier layer were sandwich-laminated so that the main surface and the barrier layer faced each other with the adhesive resin layer interposed therebetween. Here, polyethylene was used as the material of the adhesive resin layer, and the thickness thereof was adjusted to 15 μm.

Next, a polyurethane adhesive was applied to the surface of the barrier layer to form an adhesive layer so as to have a thickness of 0.5 μm.

Next, a sealant layer was formed on the adhesive layer. Specifically, a second layer containing a low density polyethylene resin, and a first layer to be provided on the second layer and containing a cyclic olefin copolymer (COC) resin were formed on the adhesive layer by an extrusion laminating method.

As a material of the first layer, TOPAS (registered trademark) manufactured by TOPAS ADVANCED POLYMERS GmbH and sold by Polyplastics Co., Ltd. was used. This resin was found to have a melt flow rate (MFR) at 190°C and a load of 21.168 N (= 2.16 kgf) of 1.8 g/10 min, a density of 1.01 g/cm$^3$, and a glass transition temperature of about 80°C. In addition, a polymer sheet made of only the first layer was produced, and the size of a polymer free volume Vf obtained by a positron annihilation lifetime measurement method was calculated. The result was 0.09 nm$^3$.

The positron annihilation lifetime measurement method is a technique in which a time period (in the order of several hundred ps to several tens ns) from the entry of positrons in a sample to the annihilation of the positrons is measured, and information relating to the size of holes (about 0.1 nm to 10 nm) existing in the sample, a number density thereof, and distribution of sizes thereof is evaluated nondestructively from the annihilation lifetime. There is a method of using a radioisotope $^{22}$Na as a radiation source of positrons.

As the method of measuring the annihilation lifetime of polymer, first, a $^{22}$NaCl aqueous solution is enclosed in a 1 cm × 1 cm polyimide film to thereby prepare a positron radiation source sample. Next, the polymer is formed in a sheet-like film so as to have a thickness of 0.5 mm to 1 mm, or a plurality of thin film sheets are stacked so as to have a total thickness of 0.5 mm to 1 mm, and then a polymer sample of 1 cm × 1 cm in size is prepared. Furthermore, the positron radiation source sample is sandwiched by two polymer samples, thereby obtaining a measurement sample.

The measurement sample is placed in a sample chamber under the condition of room temperature and in vacuum, and a time difference between a γ-radiation start signal of 1.28 MeV which is generated by radiolysis of $^{22}$Na as a radiation source and a γ-radiation stop signal of 511 keV, which is generated by the annihilation of positrons, is measured, and this measurement is repeated several million times or so. A decay curve, which is plotted by collecting statistics of time (ns) on a horizontal axis and collecting statistics of the number of counts on a vertical axis, includes a first component $\tau_1$ whose gradient of the decay is steep, a second component $\tau_2$ whose gradient of the decay is slightly gentle, a third component $\tau_3$ whose gradient of the decay is gentle, etc. If the decay curve is subjected to inverse Laplace

transform, and then time (ns) is provided on the horizontal axis, and a probability density function is provided on the vertical axis, a distribution of lifetime of each $\tau$ component, such as $\tau_1$, $\tau_2$, and $\tau_3$, appears as a peak.

The polymer free volume Vf is represented as a sphere-shaped hole having a radius R in the order of several nm formed in amorphous portions of the polymer and has an influence on the lifetime $\tau_3$ of ortho-positronium which is formed by conjugation between positrons and electrons by means of their mutual coulomb forces.

The relationship between the radius R (nm) of the polymer free volume Vf presumed as having a sphere shape and the lifetime $\tau_3$ (ns) of the ortho-positronium is represented by the following Equation (1).

$$\tau_3 = \frac{1}{2}\left[1 - \frac{R}{R+0.166} + \frac{1}{2\pi}\sin\left(2\pi\frac{R}{R+0.166}\right)\right]^{-1} \quad \text{Equation (1)}$$

The radius R (nm) of the sphere-shaped polymer free volume Vf can be calculated from the Equation (1), and the polymer free volume Vf ($nm^3$) can be calculated from the following Equation (2).

$$Vf = \frac{4}{3}\pi R^3 \qquad \text{Equation (2)}$$

As a material of the second layer, a low density polyethylene (LDPE) resin was used. This resin was found to have a melt flow rate (MFR) at 190°C and a load of 21.168 N (= 2.16 kgf) of 7.0 g/10 min, a density of 0.918 g/$cm^3$, and a melting point of 106°C.

The thicknesses of the first and second layers were adjusted to 20 $\mu$m and 10 $\mu$m, respectively. That is, a ratio of the thickness of the first layer to the thickness of the second layer was adjusted to 2:1, and the thickness of the sealant layer was adjusted to 30 $\mu$m.

A laminate was obtained in the above-mentioned manner.

<Example 2>

A laminate was produced by the same method as in Example 1 except that the thicknesses of the first layer and the second layer were adjusted to 25 $\mu$m and 5 $\mu$m, respectively. That is, in this Example, the ratio of the thickness of the first layer to the thickness of the second layer was set to 5:1.

<Example 3>

A laminate was produced by the same method as in Example 1 except that the thicknesses of the first layer and the second layer were adjusted to 10 $\mu$m and 20 $\mu$m, respectively. That is, in this Example, the ratio of the thickness of the first layer to the thickness of the second layer was set to 1:2.

<Example 4>

A laminate was produced by the same method as in Example 1 except that the thicknesses of the first layer and the second layer were adjusted to 15 $\mu$m and 10 $\mu$m, respectively. That is, in this Example, the ratio of the thickness of the first layer to the thickness of the second layer was set to 1.5:1.

<Example 5>

A laminate was produced by the same method as in Example 1 except that the thicknesses of the first layer and the second layer were adjusted to 10 $\mu$m and 15 $\mu$m, respectively. That is, in this Example, the ratio of the thickness of the first layer to the thickness of the second layer was set to 1:1.5.

<Example 6>

A laminate was produced by the same method as in Example 1 except that the thicknesses of the first layer and the second layer were adjusted to 15 $\mu$m and 15 $\mu$m, respectively. That is, in this Example, the ratio of the thickness of the first layer to the thickness of the second layer was set to 1:1.

<Example 7>

A laminate was produced by the same method as in Example 1 except that the thicknesses of the first layer and the second layer were adjusted to 20 μm and 5 μm, respectively. That is, in this Example, the ratio of the thickness of the first layer to the thickness of the second layer was set to 4:1.

<Example 8>

A laminate was produced by the same method as in Example 1 except that the thicknesses of the first layer and the second layer were adjusted to 15 μm and 5 μm, respectively. That is, in this Example, the ratio of the thickness of the first layer to the thickness of the second layer was set to 3:1.

<Example 9>

A laminate was produced by the same method as in Example 1 except that the thicknesses of the first layer and the second layer were adjusted to 20 μm and 30 μm, respectively. That is, in this Example, the ratio of the thickness of the first layer to the thickness of the second layer was set to 1:1.5.

<Example 10>

A laminate was produced by the same method as in Example 1 except that the thicknesses of the first layer and the second layer were adjusted to 20 μm and 25 μm, respectively. That is, in this Example, the ratio of the thickness of the first layer to the thickness of the second layer was set to 1:1.25.

<Example 11>

A laminate was produced by the same method as in Example 1 except that as the material of the second layer, low density polyethylene (LDPE) having a melt flow rate (MFR) at 190°C and a load of 21.168 N (= 2.16 kgf) of 3.6 g/10 min, a density of 0.923 g/cm$^3$, and a melting point of 111°C was used instead of using the low density polyethylene (LDPE) used in Example 1.

<Example 12>

A laminate was produced by the same method as in Example 1 except that as the material of the second layer, low density polyethylene (LDPE) having a melt flow rate (MFR) at 190°C and a load of 21.168 N (= 2.16 kgf) of 8.0 g/10 min, a density of 0.919 g/cm$^3$, and a melting point of 107°C was used instead of using the low density polyethylene (LDPE) used in Example 1.

<Example 13>

A laminate was produced by the same method as in Example 1 except that as the material of the second layer, low density polyethylene (LDPE) having a melt flow rate (MFR) at 190°C and a load of 21.168 N (= 2.16 kgf) of 8.4 g/10 min was used instead of using the low density polyethylene (LDPE) used in Example 1.

<Example 14>

A laminate was produced by the same method as in Example 1 except that as the material of the second layer, low density polyethylene (LDPE) having a melt flow rate (MFR) at 190°C and a load of 21.168 N (= 2.16 kgf) of 4.0 g/10 min, a density of 0.923 g/cm$^3$, and a melting point of 111°C was used instead of using the low density polyethylene (LDPE) used in Example 1.

<Example 15>

A laminate was produced by the same method as in Example 1 except that as the material of the second layer, low density polyethylene (LDPE) having a melt flow rate (MFR) at 190°C and a load of 21.168 N (= 2.16 kgf) of 5.0 g/10 min, a density of 0.922 g/cm$^3$, and a melting point of 109°C was used instead of using the low density polyethylene (LDPE) used in Example 1.

<Example 16>

A laminate was produced by the same method as in Example 1 except that as the material of the second layer, low density polyethylene (LDPE) having a melt flow rate (MFR) at 190°C and a load of 21.168 N (= 2.16 kgf) of 10.5 g/10 min, and a melting point of 107°C was used instead of using the low density polyethylene (LDPE) used in Example 1.

<Example 17>

A laminate was produced by the same method as in Example 1 except that as the material of the second layer, low density polyethylene (LDPE) having a melt flow rate (MFR) at 190°C and a load of 21.168 N (= 2.16 kgf) of 13.0 g/10 min, a density of 0.919 g/cm$^3$, and a melting point of 107°C was used instead of using the low density polyethylene (LDPE) used in Example 1.

<Comparative Example 1>

A laminate was produced by the same method as in Example 1 except that the material of the second layer was used as a material of the first layer, and the material of the first layer was used as a material of the second layer. In addition, a polymer sheet made of only the first layer was produced, and the size of a polymer free volume Vf obtained by a positron annihilation lifetime measurement method was calculated. The result was 0.15 nm$^3$.

<Comparative Example 2>

A laminate was produced by the same method as in Example 1 except that the thicknesses of the first layer and the second layer were adjusted to 27 μm and 3 μm, respectively. That is, in this Example, the ratio of the thickness of the first layer to the thickness of the second layer was set to 9:1.

<Comparative Example 3>

A laminate was produced by the same method as in Example 1 except that as the material of the second layer, low density polyethylene (LDPE) having a melt flow rate (MFR) at 190°C and a load of 21.168 N (= 2.16 kgf) of 14 g/10 min was used instead of using the low density polyethylene (LDPE) used in Example 1.

<Comparative Example 4>

A laminate was produced by the same method as in Example 1 except that the thicknesses of the first layer and the second layer were adjusted to 6 μm and 24 μm, respectively. That is, in this Example, the ratio of the thickness of the first layer to the thickness of the second layer was set to 1:4.

<Comparative Example 5>

A laminate was produced by the same method as in Example 1 except that as the material of the second layer, low density polyethylene (LDPE) having a melt flow rate (MFR) at 190°C and a load of 21.168 N (= 2.16 kgf) of 3.0 g/10 min, a density of 0.928 g/cm$^3$, and a melting point of 114°C was used instead of using the low density polyethylene (LDPE) used in Example 1.

<Comparative Example 6>

A laminate was produced by the same method as in Example 1 except that as the material of the second layer, linear low density polyethylene (LLDPE) was used instead of using the low density polyethylene (LDPE). This resin was found to have a melt flow rate (MFR) at 190°C and a load of 21.168 N (= 2.16 kgf) of 9.0 g/10 min, a density of 0.912 g/cm$^3$, and a melting point of 120°C.

<Comparative Example 7>

A laminate was produced by the same method as in Example 1 except that as the material of the second layer, linear low density polyethylene (LLDPE) was used instead of using the low density polyethylene (LDPE). This resin was found to have a melt flow rate (MFR) at 190°C and a load of 21.168 N (= 2.16 kgf) of 3.8 g/10 min, a density of 0.903 g/cm$^3$, and a melting point of 98°C.

<Evaluation>

Bags having dimensions of 10 cm in length and 10 cm in width were produced from the laminates according to Examples 1 to 17 and Comparative Examples 1 to 7. These bags were filled with a patch containing 2 mg of tulobuterol, and these bags were sealed by heat sealing. Next, the packaged articles thus obtained were left to stand at room temperature for a certain period of time, and thereafter, it was confirmed whether or not an effective component of the patch was adsorbed to the sealant layer of each of the laminates.
Also for these laminates, the adhesion strength between the barrier layer and the sealant layer was examined. A test piece having a dimension of 15 mm in width and 10 cm in length was cut out from each of the laminates, and for each of these test pieces, the adhesion strength [N/15 mm] between the barrier layer and the sealant layer was measured using a method conforming to the peeling method described in JIS K6854-3:1999. Specifically, these test pieces were subjected to peeling at a tensile speed of 300 mm/min.
The measurement results are summarized in Tables 1 and 2.

TABLE 1

| | Thickness [$\mu$m] (Ratio) | | | 1st layer's resin | | | | 2nd layer's resin | | | | Free volume of 1st layer's resin [$nm^3$] | Non-adsorptivity | | Adhesive strength [N/15mm] | Film-forming property | Tearability |
|---|---|---|---|---|---|---|---|---|---|---|---|---|---|---|---|---|---|
| | 1st layer | 2nd layer | (Ratio) | Type | Densiity [$g/cm^3$] | MFR [g/10ml n] | Melting point [°C] | Type | Density [$g/cm^3$] | MFR [g/10min] | Melting point [°C] | | After one week | After six month | | | |
| Ex.1 | 20 | 10 | (2:1) | COC | 1.01 | 1.8 | - | LDPE | 0.918 | 7.0 | 106 | 0.09 | A | A | 2.0 | A | A |
| Ex.2 | 25 | 5 | (5:1) | COC | 1.01 | 1.8 | - | LDPE | 0.918 | 7.0 | 106 | 0.09 | A | AA | 2.0 | A | A |
| Ex.3 | 10 | 20 | (1:2) | COC | 1.01 | 1.8 | - | LDPE | 0.918 | 7.0 | 106 | 0.09 | A | B | 2.0 | A | A |
| Ex.4 | 15 | 10 | (1.5:1) | COC | 1.01 | 1.8 | - | LDPE | 0.918 | 7.0 | 106 | 0.09 | A | A | 2.0 | A | A |
| Ex.5 | 10 | 15 | (1:15) | COC | 1.01 | 1.8 | - | LDPE | 0.918 | 7.0 | 106 | 0.09 | A | B | 2.0 | A | A |
| Ex.6 | 15 | 15 | (1:1) | COC | 1.01 | 1.8 | - | LDPE | 0.918 | 7.0 | 106 | 0.09 | A | A | 2.0 | A | A |
| Ex.7 | 20 | 5 | (4:1) | COC | 1.01 | 1.8 | - | LDPE | 0.918 | 7.0 | 106 | 0.09 | A | A | 2.0 | A | A |
| Ex.8 | 15 | 5 | (3:1) | COC | 1.01 | 1.8 | - | LDPE | 0.918 | 7.0 | 106 | 0.09 | A | A | 2.0 | A | A |
| Ex.9 | 20 | 30 | (1:15) | COC | 1.01 | 1.8 | - | LDPE | 0.918 | 7.0 | 106 | 0.09 | A | B | 2.0 | A | A |
| Ex.10 | 20 | 25 | (1:125) | COC | 1.01 | 1.8 | - | LDPE | 0.918 | 7.0 | 105 | 0.09 | A | A | 2.0 | A | A |
| Ex.11 | 20 | 10 | (2:1) | COC | 1.01 | 1.8 | - | LDPE | 0.923 | 3.6 | 111 | 0.09 | A | A | 2.0 | B | A |

(continued)

| | Thickness [$\mu$m] (Ratio) | | 1st layer's resin | | | | 2nd layer's resin | | | | Free volume of 1st layer's resin [$nm^3$] | Non-adsorptivity | | Adhesive strength [N/15mm] | Film-forming property | Tearability |
|---|---|---|---|---|---|---|---|---|---|---|---|---|---|---|---|---|
| | 1st layer | 2nd layer | Type | Densiity [$g/cm^3$] | MFR [g/10ml n] | Melting point [°C] | Type | Density [$g/cm^3$] | MFR [g/10min] | Melting point [°C] | | After one week | After six month | | | |
| Ex.12 | 20 | 10 | COC | 1.01 | 1.8 | - | LDPE | 0.919 | 8.0 | 107 | 0.09 | A | A | 2.0 | A | A |
| | (2:1) | | | | | | | | | | | | | | | |

TABLE 2

| | Thickness [$\mu$m] (Ratio) | | | 1st layer's resin | | | | 2nd layer's resin | | | | Free volume of 1st layer's resin [$nm^3$] | Non-adsorptivity | | Adhesive strength [N/15 mm] | Film-forming property | Tearability |
|---|---|---|---|---|---|---|---|---|---|---|---|---|---|---|---|---|---|
| | 1st layer | 2nd layer | (Ratio) | Type | Density [$g/cm^3$] | MFR [g/10min] | Melting point [°C] | Type | Density [$g/cm^3$] | MFR [g/10min] | Melting point [°C] | | After one week | After six month | | | |
| Ex. 13 | 20 | 10 | (2:1) | COC | 1.01 | 1.8 | - | LDPE | 0.918 | 8.4 | 106 | 0.09 | A | A | 2.0 | A | A |
| Ex. 14 | 20 | 10 | (2:1) | COC | 1.01 | 1.8 | - | LDPE | 0.923 | 4.0 | 111 | 0.09 | A | A | 2.0 | B | A |
| Ex. 15 | 20 | 10 | (2:1) | COC | 1.01 | 1.8 | - | LDPE | 0.922 | 5.0 | 109 | 0.09 | A | A | 2.0 | A | A |
| Ex. 16 | 20 | 10 | (2:1) | COC | 1.01 | 1.8 | - | LDPE | 0.918 | 10.5 | 107 | 0.09 | A | A | 2.0 | A | A |
| Ex. 17 | 20 | 10 | (2:1) | COC | 1.01 | 1.8 | - | LDPE | 0.919 | 13.0 | 107 | 0.09 | A | A | 2.0 | B | A |
| Comp. Ex.1 | 20 | 10 | (2:1) | LDPE | 0.918 | 7.0 | 106 | COC | 1.01 | 1.8 | - | 0.15 | C | C | 2.0 | A | A |
| Comp. Ex. 2 | 27 | 3 | (9:1) | COC | 1.01 | 1.8 | - | LDPE | 0.918 | 7.0 | 106 | 0.09 | A | AA | 2.0 | C | A |
| Comp. Ex. 3 | 20 | 10 | (2:1) | COC | 1.01 | 1.8 | - | LDPE | 0.918 | 14.0 | 106 | 0.09 | A | A | 2.0 | C | A |
| Comp. Ex.4 | 6 | 24 | (1:4) | COC | 1.01 | 1.8 | - | LDPE | 0.918 | 7.0 | 106 | 0.09 | A | C | 2.0 | A | A |
| Comp. Ex. 5 | 20 | 10 | (2:1) | COC | 1.01 | 1.8 | - | LDPE | 0.928 | 3.0 | 114 | 0.09 | A | A | 2.0 | C | A |
| Comp. Ex. 6 | 20 | 10 | (2:1) | COC | 1.01 | 1.8 | - | LLDPE | 0.912 | 9.0 | 120 | 0.09 | A | A | <0.1 | C | c |

(continued)

| | Thickness [$\mu$m] (Ratio) | | 1st layer's resin | | | | 2nd layer's resin | | | | Free volume of 1st layer's resin [$nm^3$] | Non-adsorptivity | | Adhesive strength [N/15 mm] | Film-forming property | Tearability |
|---|---|---|---|---|---|---|---|---|---|---|---|---|---|---|---|---|
| | 1st layer | 2nd layer | Type | Density [$g/cm^3$] | MFR [g/10min] | Melting point [°C] | Type | Density [$g/cm^3$] | MFR [g/10min] | Melting point [°C] | | After one week | After six month | | | |
| Comp. Ex.7 | 20 | 10 | COC | 1.01 | 1.8 | - | LLDPE | 0.903 | 3.8 | 98 | 0.09 | A | A | <0.1 | C | C |
| | (2:1) | | | | | | | | | | | | | | | |

In the columns labeled as "Ratio" in Tables 1 and 2, a ratio of the thickness of the first layer to the thickness of the second layer is described.

In the columns labeled as Non-adsorptivity, "AA" represents that the proportion of an effective component of the patch adsorbed to the sealant layer of the laminate was less than 1% by weight, "A" represents that the proportion of an effective component of the patch adsorbed to the sealant layer of the laminate was 1% by weight or more and less than 3% by weight, "B" represents that the proportion of an effective component of the patch adsorbed to the sealant layer of the laminate was 3% by weight or more and less than 5% by weight and the packaged article was of a usable level, and "C" represents that the proportion of an effective component of the patch adsorbed to the sealant layer of the laminate was 5% by weight or more and the packaged article was of a level making it unsuitable for use.

In the column labeled as "Film-forming property", "A" represents that a loss rate caused by an oscillatory phenomenon and/or a neck-in phenomenon of a melt film when forming the sealant layer by the extrusion laminating method was less than 10%. "B" represents that a loss rate caused by an oscillatory phenomenon and/or a neck-in phenomenon of a melt film when forming the sealant layer by the extrusion laminating method was in the range of 10% or more and less than 20%, and the laminate was of a usable level. "C" represents that a loss rate caused by an oscillatory phenomenon and/or a neck-in phenomenon of a melt film when forming the sealant layer by the extrusion laminating method was 20% or more, and the laminate was of a level making it unsuitable for use.

In the column labeled "Tearability", "A" means that it was possible to tear the packaged article with ease and to tear apart it linearly when torn. "C" represents that it was difficult to tear the packaged article by hand or it was impossible to tear apart linearly when torn.

As shown in Tables 1 and 2, the packaged articles whose bags were produced from the laminates according to Examples 1 to 17 were of a usable level in which the proportion of an effective component of the contents adsorbed to the sealant layer of the laminate was less than 5% by weight, even after long-term storage.

The laminates of Examples 1 to 17 were found to be excellent in the adhesion strength between the barrier layer and the sealant layer and caused no delamination.

Also, in the laminates of Examples 1 to 17, the loss rate caused by an oscillatory phenomenon and/or a neck-in phenomenon of the melt film was less than 20%, and thus the laminates were found to be of a usable level.

The packaged articles whose bags were produced from the laminates according to Examples 1 to 17 were able to be torn by hand with ease and able to be torn apart linearly when torn.

In contrast, the packaged articles whose bags were produced from the laminates according to Comparative Example 1 and Comparative Example 4 were of a level making them unsuitable for use in which the proportion of an effective component of the contents adsorbed to the sealant layer of the laminate after long-term storage was 5% by weight or more.

The laminates according to Comparative Examples 6 and 7 had a very weak adhesion strength between the barrier layer and the sealant layer of less than 0.1 (N/15 mm) and caused delamination.

The laminates according to Comparative Examples 2, 3 and 5 to 7 were of a level making them unsuitable for use, in which the loss rate caused by an oscillatory phenomenon and/or the loss rate caused by a neck-in phenomenon of each of melt films when forming the sealant layer by the extrusion laminating method was 20% or more.

Furthermore, it was difficult to tear the packaged articles whose bags were produced from the laminates according to Comparative Examples 6 and 7 by hand, and it was impossible to tear apart linearly.

## Claims

1. A laminate comprising:

   a base material layer and a sealant layer, the sealant layer comprising a first layer containing a cyclic olefin resin and a second layer interposed between the base material layer and the first layer and containing a low density polyethylene resin,
   wherein a ratio of a thickness of the first layer to a thickness of the second layer is in a range of 1:2 to 5:1,
   the low density polyethylene resin has a melt flow rate (MFR) at 190°C and a load of 21.168N of 3.6 g/10 min to 13.0 g/10 min,
   the low density polyethylene resin has a density in a range of 0.915 g/cm$^3$ to 0.925 g/cm$^3$,
   each of the first and second layers has a thickness of 5 μm or more, and
   the second layer has a thickness of 25 μm or less.

2. The laminate according to claim 1, wherein the low density polyethylene resin has a melt flow rate (MFR) at 190°C and a load of 21.168N in a range of 5.0 g/10 min to 10.5 g/10 min.

**3.** The laminate according to claim 1 or 2, wherein the sealant layer has a thickness in a range of 10 μm to 60 μm.

**4.** The laminate according to any one of claims 1 to 3, further comprising:
a barrier layer interposed between the base material layer and the sealant layer, wherein the sealant layer is in contact with the barrier layer.

**5.** The laminate according to claim 4, wherein the barrier layer includes an aluminum layer.

**6.** A package comprising the laminate according to any one of claims 1 to 5 such that the first layer is adjacent to a space for containing contents.

**7.** A packaged article comprising:

the package according to claim 6; and
contents contained in the package.

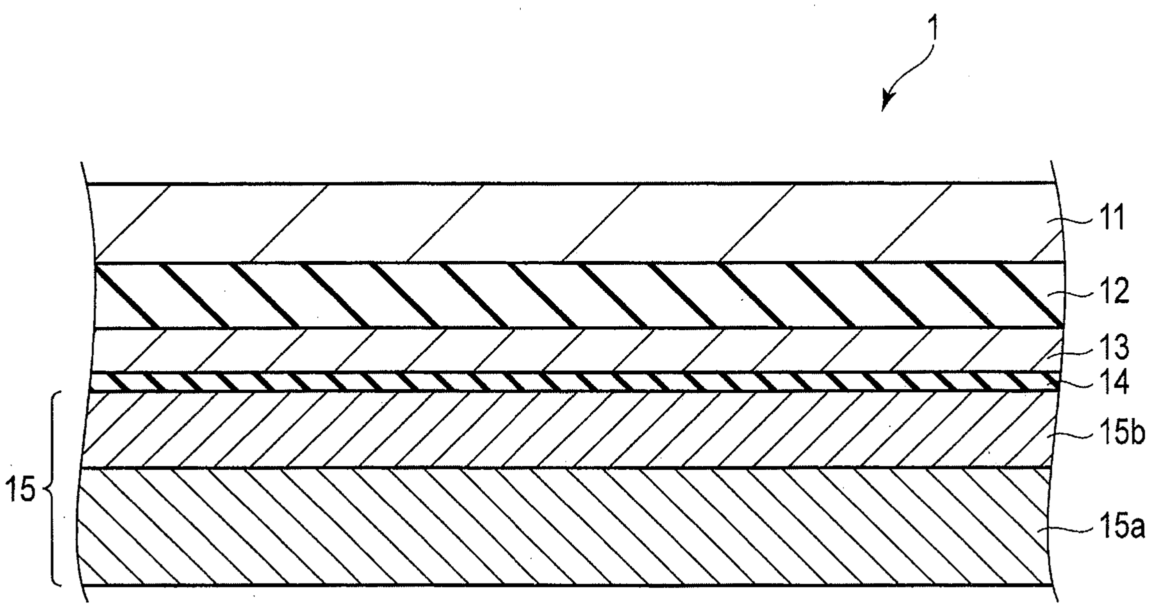
1
11
12
13
14
15b
15
15a

F I G. 1

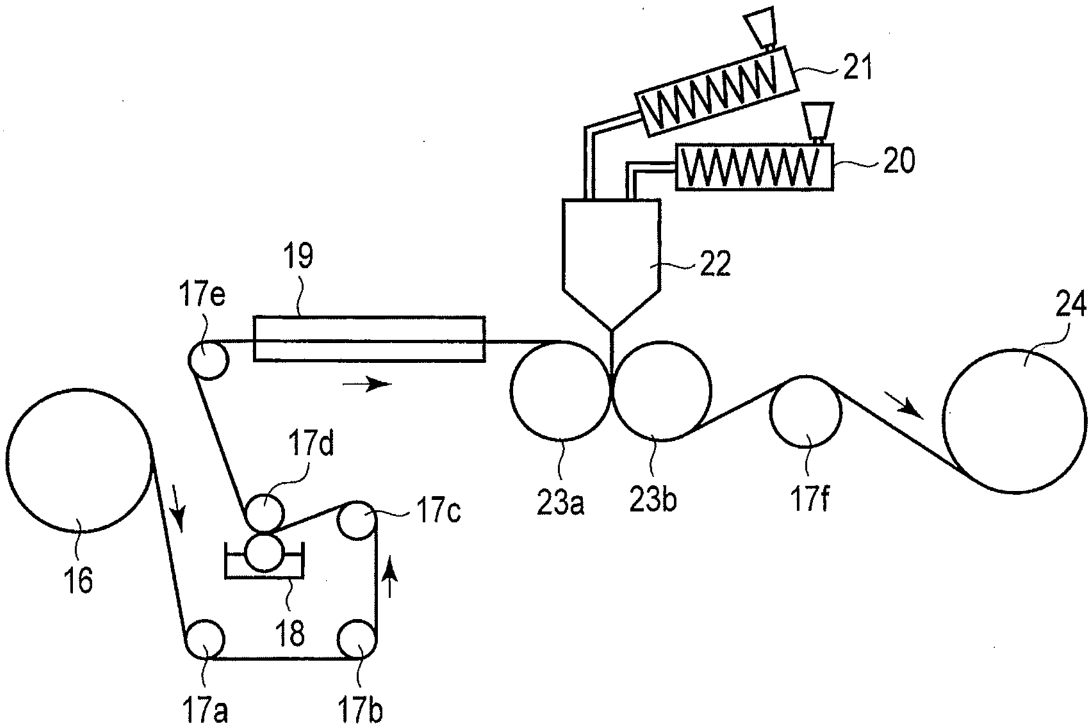
21
20
22
19
17e
24
17d
17c
23a
23b
17f
16
18
17a
17b

F I G. 2

## INTERNATIONAL SEARCH REPORT

International application No.
PCT/JP2018/009029

A. CLASSIFICATION OF SUBJECT MATTER
Int.Cl. B32B27/32(2006.01)i, B32B15/085(2006.01)i, B32B15/20(2006.01)i, B65D65/40(2006.01)i
According to International Patent Classification (IPC) or to both national classification and IPC

B. FIELDS SEARCHED
Minimum documentation searched (classification system followed by classification symbols)
Int.Cl. B32B1/00-B32B43/00, B65D65/40-B65D65/46, B65D67/00-B65D79/02

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)
JSTPlus (JDreamIII), JST7580 (JDreamIII)

C. DOCUMENTS CONSIDERED TO BE RELEVANT

| Category* | Citation of document, with indication, where appropriate, of the relevant passages | Relevant to claim No. |
|---|---|---|
| X | JP 2016-93894 A (DAINIPPON PRINTING CO., LTD.) 26 May 2016, claims 1, 4, 6, 9, paragraphs [0006], [0008], [0015]-[0016], [0068], [0073], fig. 2 (Family: none) | 1-7 |
| A | 日本ポリエチレン株式会社、カタログ, 11 October 2012 (JAPAN POLYETHYLENE CORP., catalog) | 1-7 |
| A | JP 2008-207823 A (TOPPAN PRINTING CO., LTD.) 11 September 2008, entire text (Family: none) | 1-7 |
| A | JP 2012-86876 A (DAINIPPON PRINTING CO., LTD.) 10 May 2012, entire text (Family: none) | 1-7 |
| A | JP 2013-39938 A (TOPPAN PRINTING CO., LTD.) 28 February 2013, entire text (Family: none) | 1-7 |
| A | JP 2001-171045 A (TOPPAN PRINTING CO., LTD.) 26 June 2001, entire text (Family: none) | 1-7 |

☒ Further documents are listed in the continuation of Box C.　☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 30 May 2018 (30.05.2018) | 12 June 2018 (12.06.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

## INTERNATIONAL SEARCH REPORT

International application No.
PCT/JP2018/009029

C (Continuation). DOCUMENTS CONSIDERED TO BE RELEVANT

| Category* | Citation of document, with indication, where appropriate, of the relevant passages | Relevant to claim No. |
|---|---|---|
| A | WO 2016/194555 A1 (POLYPLASTICS CO., LTD.) 08 December 2016, entire text & JP 2016-222332 A & KR 10-2017-0138577 A | 1-7 |
| A | WO 2015/041144 A1 (DIC CORPORATION) 26 March 2015, entire text (Family: none) | 1-7 |
| A | WO 2015/029877 A1 (DIC CORPORATION) 05 March 2015, entire text (Family: none) | 1-7 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008207823 A
- JP 2012086876 A